# EUROPEAN PATENT APPLICATION

(11) **EP 2 535 632 A2**
(43) Date of publication of application: **19.12.2012**
(21) Application number: 12165763.9
(22) Date of filing: 26.04.2012
(51) Int. Cl.: F16M 11/10, F16M 13/02, F16M 11/20

(54) **System for supporting, positioning and orientating at least one apparatus in the space**

(30) Priority: 16.06.2011 IT MI20110204 U
(71) Applicant: Carrara, Angelo, 24060 Sovere (BG) (IT)
(72) Inventor: Carrara, Angelo, 24060 Sovere (BG) (IT)
(74) Representative: Lotti, Giorgio

(57) **Abstract**

The present invention refers to a system for the support, positioning and orientation of at least one apparatus in the space particularly, but not exclusively, used in the furnishing industry, both interior and exterior, wherein the system (10) for the support, positioning and orientation of at least one apparatus (20) in the space comprises at least one bracket element (11) for fixing the system (10) to a surface, at least one first flange element (12) provided with means (13) for receiving the at least one apparatus (20), connection means (15, 17, 18) of the orientable type arranged between the at least one bracket element (11) and the first flange element (12) suitable for the orientation and positioning of the at least one apparatus (20) in the space according to a plurality of operating positions, the system (10) being characterised in that the connection means (15, 17, 18) of the orientable type comprise at least one arm-like connection element (15) provided with a first end (31), rotatably connected to the at least one bracket element (11), and a second end (32) also rotatably connected to the at least one first flange element (12), so as to allow the orientation and positioning of the at least one apparatus (20) in the space constrained to the at least one first flange element 12.

## Description

The present invention refers to a system for the support, positioning and orientation of at least one apparatus in the space particularly, but not exclusively, used in the furnishing industry, both interior and exterior, and electrotechnical applications.

There are currently available in the market different systems for the support, positioning and orientation of apparatus, such as for example spotlight lamps and televisions.

Such known systems may be generally applied on a wall or on a fixed bearing structure, such as for example a pole, or on a mobile structure, such as for example a tripod stand for cameras.

Usually the systems for support and positioning available in the market comprise at least one first bracket element for fixing to any surface and at least one first flange element provided with reception means for the particular apparatus to be supported and positioned.

Such bracket and flange elements are generally connected through connection means suitable for the orientation and positioning of the apparatus in the space according to a plurality of operating positions. In detail, the known connection means consist in at least one arm-like element coupled to the bracket and flange elements through hinges which allow moving such arm-like element along one direction.

Thus, the currently known systems allow the support, positioning or orientation of an apparatus, but not performing the three functions simultaneously. Actually, the movements allowed by the coupling hinges are limited around two rotational axes.

An object of the present invention is that of overcoming the aforementioned drawbacks and in particular that of providing a system for the support, positioning and orientation in the space which is capable of moving at least one apparatus around at least three axes.

These and other objects according to the present invention are attained by providing a system for the support, positioning and orientation of at least one apparatus in the space as outlined in claim 1.

Further characteristics of the system for the support, positioning and orientation of at least one apparatus in the space are an object of the dependent claims. Characteristics and advantages of a system for the support, positioning and orientation of at least one apparatus in the space according to the present invention shall be more evident from the exemplifying and non-limiting description that follows, with reference to the schematic attached drawings wherein:
- figure 1 is a perspective view of a first embodiment of a system for the support, positioning and orientation of at least one apparatus in the space according to the present invention;
- figure 2 is a first perspective side view of the system of figure 1 connected to a spotlight;
- figure 3 is a perspective rear view of the system of figure 2;
- figure 4 is a top view of the system of figure 2;
- figure 5 is a second perspective side view of the system of figure 2;
- figure 6 is a first perspective side view of a second embodiment of a system for the support, positioning and orientation of at least one apparatus in the space according to the present invention connected to a spotlight;
- figure 7 is a perspective rear view of the system of figure 6;
- figure 8 is a top view of the system of figure 6;
- figure 9 is a second perspective side view of the system of figure 6;
- figure 10 is a perspective view of a third embodiment of a system for the support, positioning and orientation of at least one apparatus in the space according to the present invention;

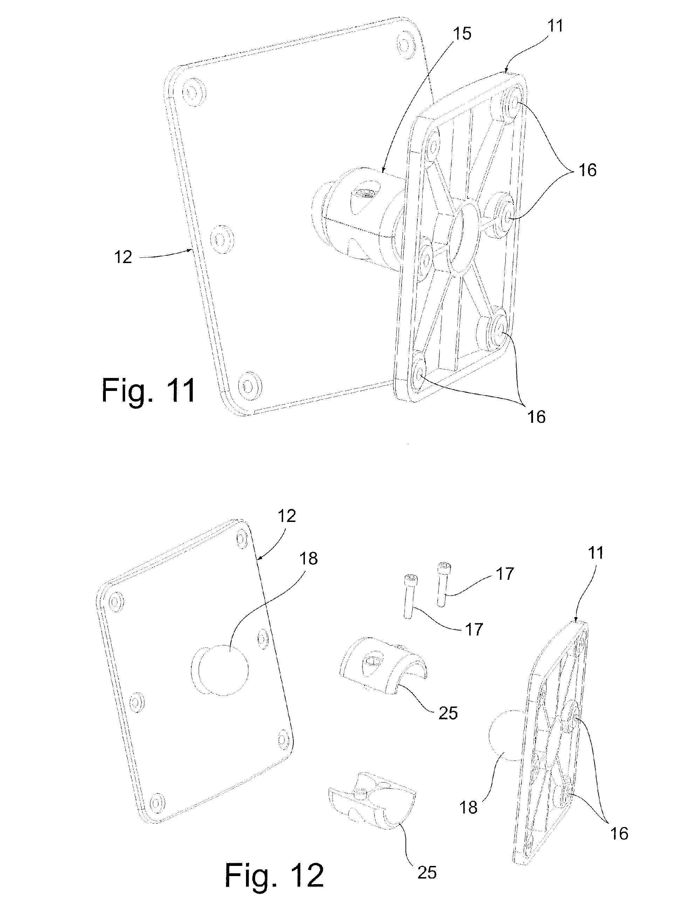

- figure 11 is a perspective rear view of the system of figure 10;
- figure 12 is a first perspective exploded view of the system of figure 10;
- figure 13 is a second perspective exploded view of the system of figure 10;

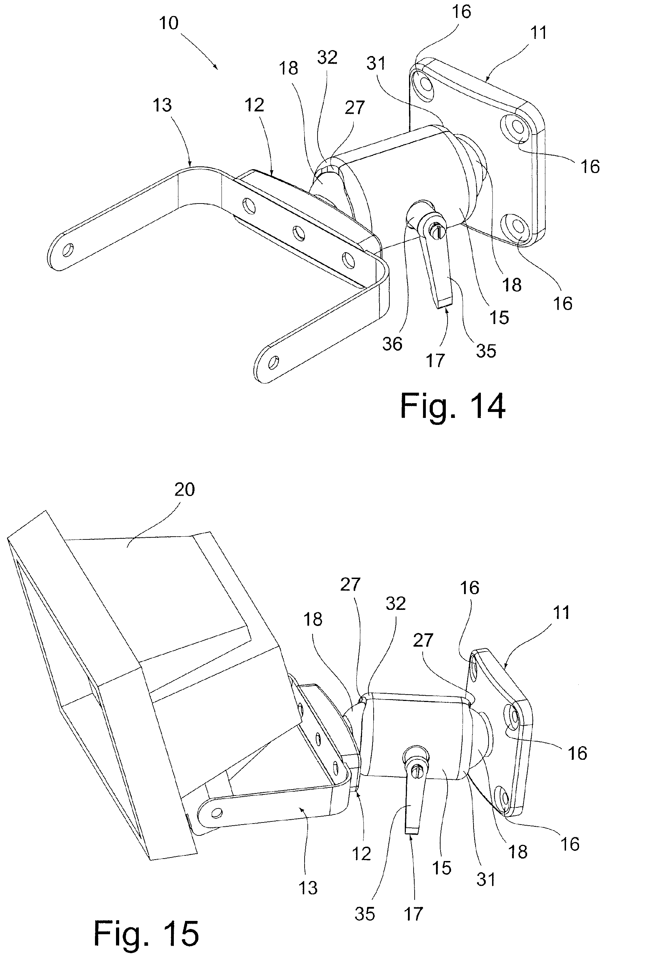

- figure 14 is a perspective view of a fourth embodiment of a system for the support, positioning and orientation of at least one apparatus in the space according to the present invention;
- figure 15 is a side perspective view of the system of figure 14 connected to a spotlight lamp;

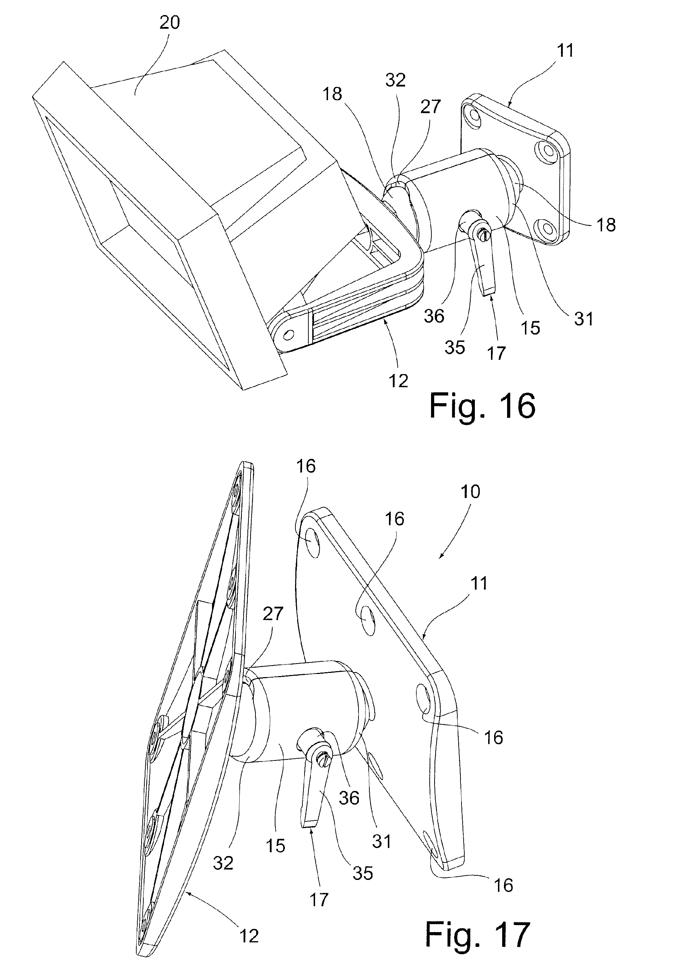

- figure 16 is a side perspective view of a fifth embodiment of a system for the support, positioning and orientation of at least one apparatus in the space according to the present invention connected to a spotlight lamp;
- figure 17 is a perspective view of a sixth embodiment of a system for the support, positioning and orientation of at least one apparatus in the space according to the present invention;
- figure 18 is an exploded perspective view of the system of figure 17.

With reference to the figures, a system for the support, positioning and orientation of at least one apparatus in the space, in turn indicated in the figures with 20, is shown and indicated in its entirety with 10.

The at least one apparatus 20 is preferably a spotlight - interior and/or exterior - or a television or an advertisement billboard and/or signboard.

More generally, the at least one apparatus 20 may be any electronic and non-electronic device.

The system 10 comprises at least one bracket element 11 for fixing the system 10 to a surface, and at least one first flange element 12 provided with means 13 for receiving the apparatus 20. It is important to observe that the at least one bracket element 11 may be provided for fixing the system 10 on any wall or on a fixed and/or mobile support structure, such as for example a scaffolding or a trolley.

The system 10 for the support, positioning and orientation of at least one apparatus 20 in the space also comprises connection means 15, 17, 18 of the orientable type arranged between the at least one bracket element 11 and the at least one first flange element 12. Such connection means 15, 17, 18 are suitable for the orientation and positioning of the at least one apparatus 20 in the space according to a plurality of operating positions.

In the rest of the document, exemplifying but non-limiting reference shall be made to a bracket element 11 and a first flange element 12, though they may be more than one.

According to the present invention, the connection means of the orientable type 15, 17, 18 comprise at least one arm-like connection element 15 provided with a first end 31, rotatably connected to the bracket element 11, and a second end 32 also rotatably connected to the first flange element 12, so as to allow the orientation and positioning of the at least one apparatus 20 in the space constrained to the first flange element 12.

Preferably, the bracket element 11 is a plate in which there is provided a plurality of seats 16 for engaging fastening means (not illustrated), such as for example screws.

Advantageously, the connection means of the orientable type 15, 17, 18 are provided with locking means 17 releasable in position suitable for holding, by means of the arm-like element 15, the at least one apparatus 20 in one among the plurality of operating positions that it may assume.

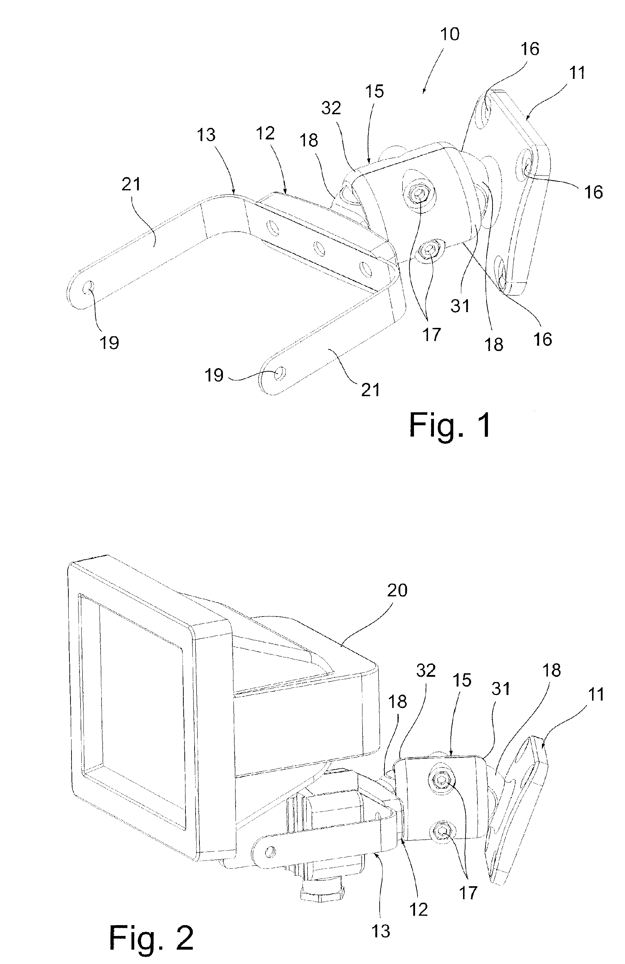

Such locking means 17 are preferably screw elements which can be fastened manually by means of suitable tools, as observable for example in figure 1. Alternatively, the locking means 17 may be snap-releasable after being pre-loaded for example by compressing a spring and the subsequent release by means of an unlocking button.

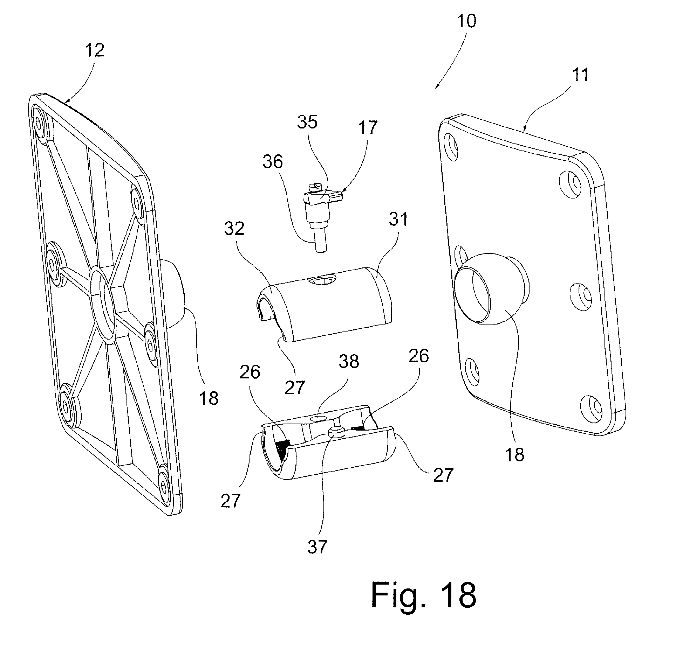

According to a further embodiment, the locking means 17 comprise a handle element 35 and a pin 36 constrained to each other so as to be mutually integral as observable in figure 18. In this case, the arm-like element 15 is advantageously provided with a coupling seat (not illustrated) in which the pin 36 is at least partly inserted and moved in rotation up to reaching a position, corresponding to one of the operating positions of the at least one apparatus 20, in which it is integral with the very coupling seat.

Preferably the handle element 35 and the pin 36 are made in a single piece.

Preferably the pin 36 is threaded at the end which is inserted into the coupling seat which in turn is provided with a corresponding counter-thread.

The movement of the pin 36 within the coupling seat is obtained by intervening on the handle element 35. In particular such handle element 35 may assume - by rotating - a release position in which the pin 36 is freely rotatably moveable within the seat and the arm-like element 15 allows the orientation and positioning of the least one apparatus 20 in the space, and a locking position in which the pin 36 is reversibly integral with the coupling seat and the arm-like element 15 holds the at least one apparatus 20 in one of the operating positions.

Advantageously, the connection means 15, 17, 18 comprise at least two spherical joints 18 which are connected on one side to the bracket element 11 and to the first flange element 12 and on the other side respectively to the first 31 and second 32 end of the at least one arm 15, as observable for example in figure 1.

In particular illustrated embodiments, the at least two spherical joints 18 are spherical portions projecting from the bracket element 11 and from the first flange element 12; such spherical portions are suitable for engagement with the first 31 and the second 32 ends of the at least one arm 15.

Furthermore, the at least one arm-like element 15 comprises advantageously two half-shells 25 prearranged to be constrained to each other through the locking means 17; in such case the first 31 and the second 32 ends have a circular section, so as to allow the socket-engagement engagement with the two spherical portions.

Should the locking means 17 comprise the handle element 35 and the pin 36, the two half-shells 25 are engaged by means of respective projecting portions 37 and housing seats 38 provided on each one of them as shown in figure 18. When the handle element 35 is in a release position, the two half-shells 25 allow the movement of the arm-like element 15 with respect to the spherical portions; otherwise when the handle element 35 is an a locking position, the two half-shells are fastened around the spherical portions substantially becoming integral therewith.

In order to guarantee further stability of such locking configuration, the two half-shells 25 internally comprise machined grip surfaces 26 at the seats for receiving spherical joints.

In the shown example, such machined surfaces 26 are knurled surfaces but alternatively they may also be portions provided using high friction material, such as rubber.

Furthermore, as shown in the figures regarding the embodiment with a handle 35, the seats for receiving the spherical joints 18 in the half-shells 25 are not perfectly circular; the half-shells 25 actually comprise - at the ends - two elongated lobes 27 arranged in a specular position to obtain two stable end stop positions in which in such lobes 27 there may also be partly housed the base portion which connects the spherical joints 18 to the first flange element 12 or to the bracket element 11.

Alternatively, the at least two spherical joints 18 are constrained through means for fastening to the bracket element 11 and to the first flange element 12.

The reception means 13 preferably comprise a second flange element 13 connected to the first flange element 12. Such second flange element 13 is advantageously U-shaped and it is suitable for engagement with the at least one apparatus 20.

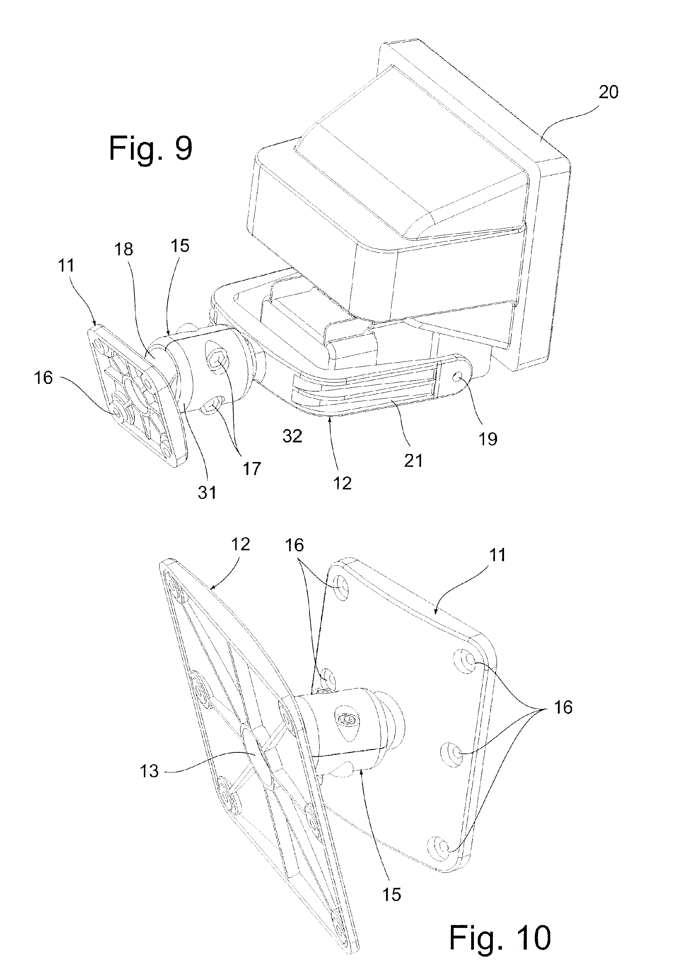

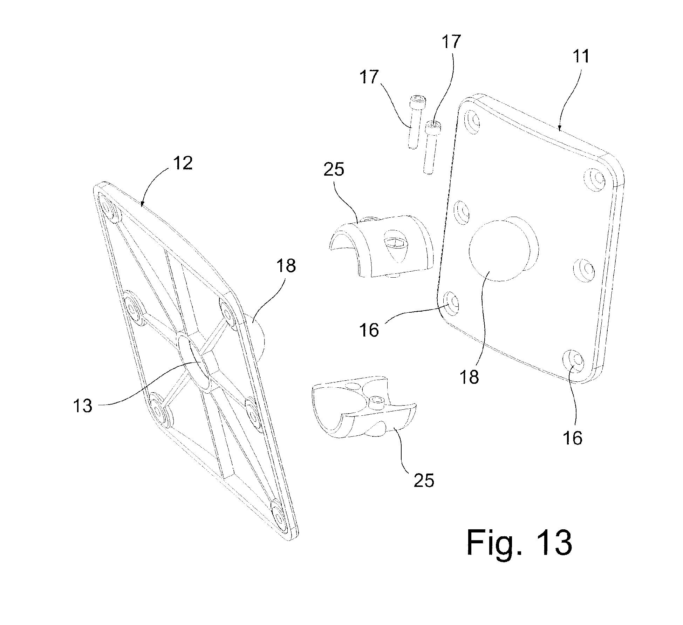

Alternatively, as observable in figures 10 and 13, the reception means 13 comprise one or more seats for engaging the at least one apparatus 20.

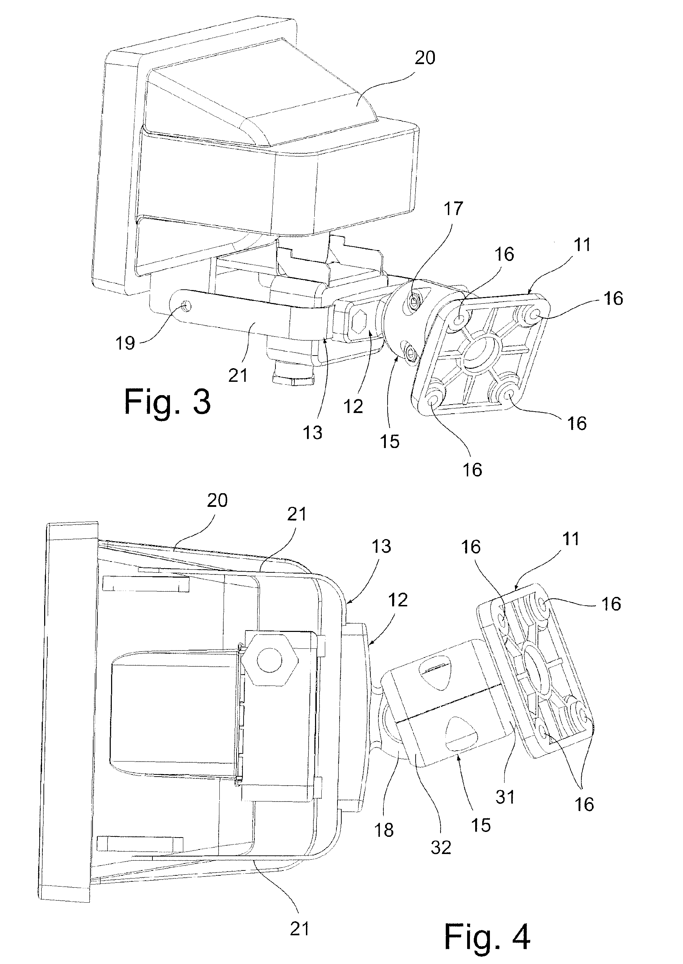

In a first embodiment illustrated in figures 1 to 5, the first 12 and the second 13 flange elements are constrained to each other through fastening means (not illustrated).

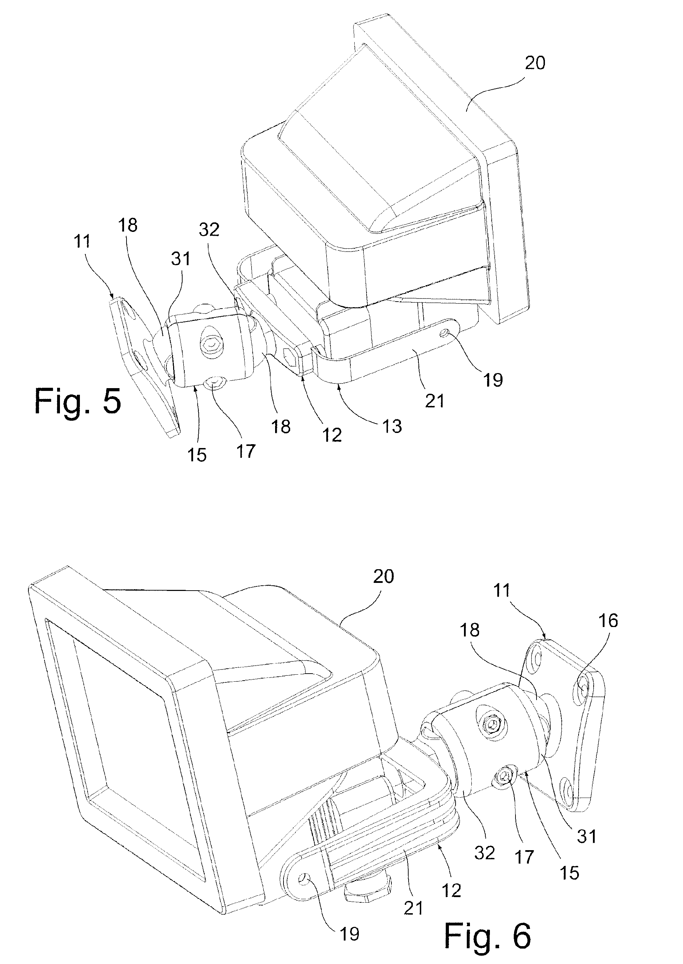

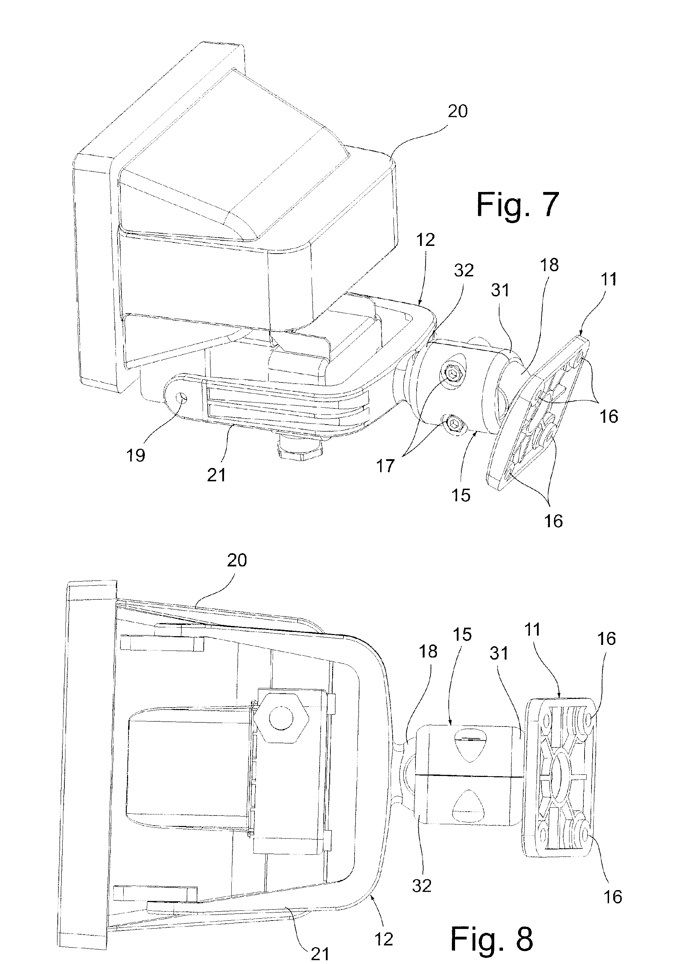

Alternatively, in a second embodiment illustrated in figures 6 to 9, the first 12 and the second 13 flange elements are made of a single piece.

In any case, as observable in all figures, on the opposite extensions 21 of such second U-shaped flange element there is provided one or more pairs of seats 19 for engaging the screw elements required for fastening the at least one apparatus 20 to the second flange element.

Preferably, the bracket element 11, the first flange element 12, the reception means 13 and the connection means of the orientable type 15, 17, 18 are made of reinforced technopolymers or other materials also of metal type provided with different types of paint finishing depending on the apparatus 20 to be supported. In such case the fastening means and the locking means 17 used for assembling the system 10 are made of metal.

The outlined description clearly reveals the characteristics and advantages of the system for the support, positioning and orientation of at least one apparatus in the space subject of the present invention.

Actually, the presence of the at least two spherical joints allows moving the arm-like element and the first flange element around at the at least three axes in an entirely independent manner; thus, not only is it possible to position the supported apparatus, but it can also be directed in the space, with the aim of optimizing the use thereof.

Let us consider the possibility of the positioning and orientation of a spotlight so as to guarantee the optimized lighting of a given area, or the possibility of the positioning and orientation of a television so as to guarantee the best view angle for a user. Furthermore, it is observed that the optimal positioning and orientation of the apparatus is attained manually in a simple and immediate manner by the user.

For example, the use of a handle element makes the passage of the apparatus supported by an operating position to another one very quick and simple and comfortable given that that the movement of such handle element is manual and it does not require the use of any tool.

Lastly, it is clear that the system for the support, positioning and orientation of at least one apparatus in the space as conceived can be subjected to numerous modifications and variants, all falling within the scope of protection of the invention; furthermore, all details can be replaced by technically equivalent elements. In practice, the materials used, as well as the dimensions, may vary depending on the technical requirements.

## Claims

1. System (10) for the support, positioning and orientation of at least one apparatus (20) in the space comprising:
- at least one bracket element (11) for fixing said system (10) to a surface;
- at least one first flange element (12) provided with means (13) for receiving said at least one apparatus (20);
- connection means (15, 17, 18) of the orientable type arranged between said at least one bracket element (11) and one first flange element (12) suitable for the orientation and positioning of said at least one apparatus (20) in the space according to a plurality of operating positions;
**characterised in that** said connection means (15, 17, 18) of the orientable type comprise:
- at least one arm-like connection element (15) provided with a first end (31), rotatably connected to said at least one bracket element (11), and a second end (32) also rotatably connected to said at least one first flange element (12), so as to allow the orientation and positioning of said at least one apparatus (20) in the space constrained to said at least one first flange element 12.

2. System (10) for the support, positioning and orientation of at least one apparatus (20) in the space according to claim 1 **characterised in that** said connection means (15, 17, 18) of the orientable type are provided with locking means (17) releasable in position suitable for holding said at least one apparatus (20) in one among said plurality of operating positions.

3. System (10) for the support, positioning and orientation of at least one apparatus (20) in the space according to claim 2 **characterised in that** said locking means (17) are screw elements.

4. System (10) for the support, positioning and orientation of at least one apparatus (20) in the space according to claim 2 **characterised in that** said locking means (17) are snap-releasable being pre-loaded.

5. System (10) for the support, positioning and orientation of at least one apparatus (20) in the space according to claim 2 **characterised in that** said locking means (17) comprise a handle element (35) and a pin (36) constrained to each other in a manner such to be integral and that said arm-like element (15) is provided with a coupling seat in which said pin (36) is inserted at least partly, said handle element (35) rotating between a release position in which said pin (36) is freely mobile in rotation within said coupling seat and said arm-like element (15) allows the orientation and positioning of said at least one apparatus (20) in the space, and a locking position in which said pin (36) is reversibly integral with said seat and said arm-like element (15) holds said at least one apparatus (20) in one of the operating positions.

6. System (10) for the support, positioning and orientation of at least one apparatus (20) in the space according to claim 5 **characterised in that** said pin (36) is threaded at the end which is inserted in the coupling seat which is in turn provided with a corresponding counter-thread.

7. System (10) for the support, positioning and orientation of at least one apparatus (20) in the space according to one of the preceding claims **characterised in that** said reception means (13) comprise a second U-shaped flange element (13) adapted for the engagement with said at least one apparatus (20), said second flange element (13) being connected to said first flange element (12).

8. System (10) for the support, positioning and orientation of at least one apparatus (20) in the space according to claim 7 **characterised in that** said first (12) and second (13) flange elements are made in a single piece.

9. System (10) for the support, positioning and orientation of at least one apparatus (20) in the space according to one of the preceding claims **characterised in that** said connection means of the orientable type (15, 17, 18) comprise at least two spherical joints (18) connected on one side to said at least one bracket element (11) and to said at least one first flange element (12) and on the other side respectively to said first (31) and second (32) ends of said at least one arm (15).

10. System (10) for the support, positioning and orientation of at least one apparatus (20) in the space according to one of the preceding claims **characterised in that** said at least two spherical joints (18) are spherical portions suitable for engagement with said first (31) and second (32) ends of said at least one arm (15), said spherical portions projecting from said at least one bracket element (11) and at least one first flange element (12).

11. System (10) for the support, positioning and orientation of at least one apparatus (20) in the space according to one of the preceding claims **characterised in that** said at least one arm (15) comprises two half-shells (25) prearranged to be constrained to each other.

12. System (10) for the support, positioning and orientation of at least one apparatus (20) in the space according to claim 11 **characterised in that** said two half-shells (25) internally contain machined gripping surfaces (26) at the seats for receiving spherical joints.

13. System (10) for the support, positioning and orientation of at least one apparatus (20) in the space according to claim 11 or 12 **characterised in that** said half-shells (25) comprise - at the ends - two elongated lobes (27) arranged in a specular position to obtain two stable end-stop positions.

14. System (10) for the support, positioning and orientation of at least one apparatus (20) in the space according to one of the preceding claims **characterised in that** said at least one bracket element (11), said at least one first flange element (12), said reception means (13) and said connection means of the orientable type (15, 17, 18) are made of reinforced technopolymers or other materials also of metal type provided with different types of paint finishing depending on said at least one apparatus (20) to be supported.
